**Europäisches Patentamt**

**European Patent Office**

**Office européen des brevets**

(19)

(11) Veröffentlichungsnummer : **0 204 246**
**B1**

(12) **EUROPÄISCHE PATENTSCHRIFT**

(45) Veröffentlichungstag der Patentschrift :
03.01.90

(51) Int. Cl.$^5$ : **C 08 G 18/65, C 08 G 18/76**

(21) Anmeldenummer : 86107148.8

(22) Anmeldetag : 27.05.86

(54) Verfahren zur Herstellung von elastischen Formkörpern.

(30) Priorität : 07.06.85 DE 3520326

(43) Veröffentlichungstag der Anmeldung :
10.12.86 Patentblatt 86/50

(45) Bekanntmachung des Hinweises auf die Patenterteilung : 03.01.90 Patentblatt 90/01

(84) Benannte Vertragsstaaten :
AT BE CH DE FR GB IT LI NL SE

(56) Entgegenhaltungen :
EP–A– 124 843
FR–A– 1 479 890
US–A– 4 526 905
US–A– 4 546 114
CHEMICAL ABSTRACTS, Band 103, Nr. 2, Juli 1985,
Seite 67, Zusammenfassung Nr. 7608h, Columbus,
Ohio, US; & JP-A-60 18 514 (SANYO CHEMICAL
INDUSTRIES LTD) 30-01-1985

(73) Patentinhaber : BAYER AG
D-5090 Leverkusen 1 Bayerwerk (DE)

(72) Erfinder : Weber, Christian, Dr.
Paul-Klee-Strasse 68a
D-5090 Leverkusen (DE)
Erfinder : Schäfer, Hermann, Dr.
Sürderstrasse 27
D-5090 Leverkusen (DE)

## Beschreibung

Die vorliegende Erfindung betrifft ein Einstufen-Verfahren zur Herstellung elastischer Formkörper mit einer geschlossenen Oberflächenschicht mittels der Reaktionsspritzgußtechnik, in welchem hochreaktive Systeme aus Polyisocyanaten, höhermolekularen Polyhydroxyl (polyamino) verbindungen und Polyaminen eingesetzt werden.

Die Herstellung von elastischen Formkörpern mit einer geschlossenen Oberflächenschicht mittels der Reaktionsspritzgußtechnik aus den genannten Ausgangsmaterialien ist bereits bekannt (vgl. z. B. DE-AS 2 622 951 (US-PS 4 218 543), EP-A-00 81 701, US-PS 4 296 212, US-PS 4 324 867 oder US-PS 4 374 210).

Bei geeigneter Wahl der Ausgangskomponenten ist es nach diesen Verfahren möglich, sowohl elastische als auch starre Produkte bzw. alle dazwischenliegende Varianten herzustellen.

Die resultierenden Formkörper werden beispielsweise in der Schuhindustrie als Sohlen oder insbesondere in der Automobilindustrie als Karosserieteile eingesetzt. Die Verarbeitung der Rohstoffe erfolgt nach dem sogenannten Reaktionsspritzgußverfahren (RSG-Verfahren). Es handelt sich hierbei um eine Fülltechnik, bei der die hochreaktiven, flüssigen Ausgangskomponenten über Hochdruckdosieraggregate mit großer Austragsleistung nach Vermischen in sogenannten zwangsgesteuerten Mischköpfen in kürzester Zeit in die Form eingespritzt werden. So wird beispielsweise in der DE-AS 2 622 951 beschrieben, wie man selbst extrem reaktive Systeme, also one-shot-Gemische aus bei Raumtemperaturen flüssigen Di- oder Polyisocyanaten auf Basis von 4,4'-Diisocyanatodiphenylmethan, aktiven aromatischen Polyaminen, höhermolekularen Polyhydroxylverbindungen mit primären Hydroxylgruppen und starken Katalysatoren, mit Startzeiten bis herab zu weniger als einer Sekunde, verarbeiten kann.

Die Verfestigung des Reaktionsgemisches nach Schußende erfolgt dabei so schnell, daß bei extrem reaktiven Ansätzen bereits nach 5 Sekunden die Form geöffnet und das Teil entformt werden kann.

One-shot-Gemische aus einer Polyisocyanatkomponente, aktiven aromatischen Diaminen und Polyethern mit primären und/oder sekundären Aminogruppen führen bei Verarbeitung nach dem RSG-Verfahren zu Polyharnstoff-Elastomeren (vgl. z. B. die EP-A-0 081 701).

Für einen Einsatz als Werkstoff für Karosserieelemente wird eine hohe Steifigkeit der Polyharnstoff-Elastomeren gefordert. Durch Mitverwendung von GLykolen als Co-Kettenverlängerer kann die Biegesteifigkeit erhöht, werden, gleichzeitig werden jedoch die thermischen Eigenschaften der Formteile, wie Biegemodul bei hoher und niedriger Temperatur sowie Wärmestand (sag) nachteilig verändert.

Einer Anhebund des Anteils an Diamin-Kettenverlängerer im one-shot-System sind ebenfalls Grenzen gesetzt. Unter normalen Verarbeitungsbedingungen (50-70 °C Werkzeugtemperatur) resultieren Formteile, die aufgrund ihrer Sprödigkeit selbst nach langer Formstandzeit nicht « intakt » entformbar sind. Si ist z. B. bei Materialien auf Basis des in großem Maßstab eingesetzten Diethyltoluylendiamin (DETDA) eine Erhöhung des Biegemoduls von ca. 350 bis 440 MPa (entsprechend 23-25 Gew.-% DETDA bezogen auf alle aktive Wasseratome enthaltenden Bestandteile der Reaktionsmischung) ohne Einsatz von Füllstoffen nicht möglich. Dies steht auch im Einklang mit der Lehre der EP-A-0 124 843 (insbesondere Beispiel III), wo bei Verwendung von 25 Gew.-% DETDA 'entsprechend der maximal verarbeitbaren Menge DETDA bei der in den Ausführungsbeispielen zur Anwendung gelangenden Formtemperatur von 66 °C) der obere Grenzwert von 440 MPa (= 63 000 psi) erreicht wird. Eine weitere Erhöhung des Biegemoduls ist gemäß dieser Vorveröffentlichung nur durch Verwendung eines anderen Diamins als DETDA möglich.

Es war daher die der Erfindung zugrundeliegende Aufgabe, ein verbessertes Verfahren zur Herstellung von elastischen Formkörpern mit einer geschlossenen Oberflächenschicht mittels der Reaktionsspritzgußtechnik unter Verwendung der genannten Ausgangsmaterialien zur Verfügung zu stellen, welches unter Verwendung von DETDA als aminischem Kettenverlängerungsmittel und unter Beibehaltung der Vorteile der bekannten Verfahren (insbesondere kurze Formstandzeit) die Herstellung von elastischen Formkörpern mit besonders hohem Biegemodul gestattet.

Diese Aufgabe konnte durch die Bereitstellung des nachstehend näher beschriebenen erfindungsgemäßen Verfahrens gelöst werden. Erst durch die erfindungswesentliche Maßnahme, die Werkzeugtemperatur vor Befüllen auf mindestens 105 °C zu halten, ist es möglich, den Anteil an Diamin-Kettenverlängerungsmittel so zu erhöhen, daß die Herstellung von Formkörpern mit einem Biegemodul von bis zu 1 000 MPa gelingt. Hierbei ist vor allem überraschend, daß trotz des hohen Anteils an hochreaktiven Diamin-Kettenverlängerungsmitteln im Reaktionsgemisch bei der bislang unüblich hohen Werkzeugtemperatur keine schlagartige Bildung von Polyharnstoff an der Heißen Werkzeugoberfläche stattfindet, die jedes Fließen bei geringen Werkzeugquerschnitten verhindern würde. Es mußte nämlich davon ausgegangen werden, daß eine Erhöhung der Werkzeugtemperatur auf mindestens 105 °C den Einsatz von Diamin-Kettenverlängerungsmitteln in im Vergleich zu den bekannten Verfahren erhöhter Konzentration unmöglich machen würde. Überraschenderweise ermöglicht das nachstehend näher beschriebene erfindungsgemäße Verfahren jedoch die Herstellung von einwandfrei entformbaren Formkörpern, die einen wesentlich erhöhten Biegemodul aufweisen, und die sich darüber hinaus durch sehr gute sonstige mechanische Eigenschaften und einen hohen Wärmestand auszeichnen.

Gegenstand der Erfindung ist ein Verfahren zur Herstellung von gegebenenfalls zellförmigen, elastischen Formkörpern einer Dichte von 0,8 bis 1,4 g/cm$^3$ mit einer geschlossenen Oberflächenschicht

2

aus gegebenenfalls Urethangruppen aufweisenden Polyharnstoff-Elastomeren auf Basis von

a) bei Raumtemperatur flüssigen Di- oder Polyisocyanaten auf Basis von Diisocyanatodiphenylmethan,

b) Lösungen von 1-Methyl-3,5-diethyl-2,4-diaminobenzol oder einer Mischung aus diesem mit 1-Methyl-3,5-diethyl-2,6-diaminobenzol in Verbindungen mit einem (mittleren) Molekulargewicht zwischen 1 800 und 12 000, welche mindestens zwei gegenüber Isocyanatgruppen reaktionsfähige Gruppen enthalten, und

c) gegebenenfalls den in der Polyurethanchemie an sich bekannten Hilfs- und Zusatzmitteln, wobei die Komponenten a) bis c) als one-shot-System nach der Reaktionsspritzgußtechnik verarbeitet und die Formkörper nach einer Formstandzeit von 5 bis 60 Sekunden entformt werden, dadurch gekennzeichnet, daß man die in der Komponente b) vorliegenden Diamine in einer Menge verwendet, die einem Anteil der Diamine in der Komponente b) von 34-45 Gewichtsprozent entspricht und die Werkzeugtemperatur bei mindestens 105 °C hält.

Bei den erfindungsgemäßen Verfahrensprodukten handelt es sich um gegebenenfalls Urethangruppen aufweisende Polyharnstoffe. Vorzugsweise stellen die erfindungsgemäßen Verfahrensprodukte Polyurethan-Polyharnstoffe dar, jedoch ist es auch möglich, daß beim erfindungsgemäßen Verfahren bei Verwendung von Urethangruppen-freien Polyisocyanaten und Hydroxylgruppen-freien, aminischen Reaktionspartnern reine Polyharnstoffe entstehen.

Als erfindungsgemäß einzusetzende Ausgangskomponenten a) kommen beliebige, bei Raumtemperatur flüssige Di- oder Polyisocyanate auf Basis von Diisocyanatodiphenylmethan in Betracht. Hierzu gehören beispielsweise.

1. bei Raumtemperatur flüssige Gemische aus 2,4- und 4,4'-Diisocyanatodiphenylmethan, die gegebenenfalls geringe Anteile an 2,2'-Diisocyanatodiphenylmethan enthalten können ;

2. bei Raumtemperatur flüssige Polyisocyanatgemische der Diphenylmethanreihe, wie sie in an sich bekannter Weise durch Phosgenierung von Anilin/Formaldehyd-Kondensaten erhalten werden, und die neben Diisocyanaten der unter 1. genannten Art bis zu 30, vorzugsweise bis zu 10 Gew.-%, bezogen auf Gesamtgemisch an höheren, mehr als zwei Isocyanatgruppen aufweisende Homologe dieser Diisocyanate enthalten ;

3. bei Raumtemperatur flüssige, Urethangruppen aufweisende Polyisocyanate, wie sie durch Umsetzung der unter 1. und 2. genannten Di- und Polyisocyanate oder von bei Raumtemperatur festem 4,4'-Diisocyanatodiphenylmethan mit unterschüssigen Mengen an niedermolekularen Diolen oder Triolen, vorzugsweise Polypropylenglykolen mit einem Molekulargewicht von maximal 700 zugänglich sind, insbesondere die Umsetzungsprodukte von 4,4'-Diisocyanatodiphenylmethan mit 0,05 bis 0,3 Mol, pro Mol Diisocyanat, an Di- und/oder Tripropylenglykol ;

4. bei Raumtemperatur flüssige Carbodiimid- und/oder Uretonimingruppen aufweisende Modifizierungsprodukte der unter 1. und 2. genannten Di- und Polyisocyanate oder auch von bei Raumtemperatur festem 4,4'-Diisocyanatodiphenylmethan oder

5. bei Raumtemperatur flüssige NCO-Semiprepolymere, wie sie durch Umsetzung der unter 1. und 2. genannten Di- und Polyisocyanate oder durch Umsetzung von reinem 4,4'-Diisocyanatodiphenylmethan mit unterschüssigen Mengen an organischen Polyhydroxylverbindungen unter Einhaltung eines Äquivalentverhältnisses von Isocyanatgruppen zu Hydroxylgruppen von 1 : 0,01 bis 1 : 0,5, vorzugsweise 1 : 0,015 bis 1 : 0,25 erhalten werden, wobei als Polyhydroxylverbindungen beispielsweise solche der gegebenenfalls in der Komponente b) vorliegenden Art verwendet werden. Die Herstellung derartiger NCO-Semiprepolymere ist beispielsweise in der US-PS 4 374 210 beschrieben.

Zu den besonders bevorzugten, beim erfindungsgemäßen Verfahren einzusetzenden Polyisocyanaten gehören die gemäß DE-PS 1 618 380 erhältlichen Umsetzungsprodukte von 1 Mol 4,4'-Diisocyanatodiphenylmethan mit 0,05 bis 0,3 Mol an Polypropylenglykolen mit einem maximalen Molekulargewicht von 700, vorzugsweise mit Di- und/oder Tripropylenglykol, sowie die Carbodiimid- und/oder Uretonimingruppen aufweisenden, bei Raumtemperatur flüssigen Diisocyanate auf Basis von 4,4'-Diisocyanatodiphenylmethan und gegebenenfalls 2,4'-Diisocyanatodiphenylmethan, wie sie beispielsweise gemäß DE-PS 1 092 007, DE-OS 2 537 685, US-PS 3 384 653, US-PS 3 449 256, US-PS 4 154 752 oder EP-A-00 57 862 zugänglich sind. Selbstverständlich können beim erfindungsgemäßen Verfahren als Komponente a) auch beliebige Gemische der beispielhaft genannten Polyisocyanate eingesetzt werden.

Die erfindungsgemäß zum Einsatz gelangende Komponente b) besteht aus Lösungen von aromatischen Diaminen der nachstehend genannten Art in Verbindungen mit einem Molekulargewicht zwischen 1 800-12 000, welche mindestens zwei gegenüber Isocyanatgruppen reaktionsfähige Gruppen enthalten, in einem Molverhältnis der Diamine zu den Verbindungen mit einem Molekulargewicht zwischen 1 800 und 12 000 von 3 : 1 bis 60 : 1, vorzugsweise von 10 : 1 bis 30 : 1.

Bei den genannten Verbindungen mit einem Molekulargewicht zwischen 1 800 bis 12 000, welche mindestens zwei gegenüber Isocyanatgruppen reaktionsfähige Gruppen enthalten, handelt es sich vorzugsweise um Polyalkylenpolyether des Molekulargewichtsbereiches 1 800 bis 12 000, vorzugsweise 3 000 bis 7 000, mit Hydroxyl- und/oder Aminogruppen. Im Falle der Verwendung von Polyethergemischen können einzelne Komponenten des Gemischs auch ein unter 1 800, beispielsweise ein zwischen 500 und 1 800 liegendes Molekulargewicht aufweisen, vorausgesetzt, daß das mittlere Molekulargewicht des Gemischs innerhalb der zuletzt genannten Bereiche liegt. Die Verwendung derartiger Gemische mit

3

Einzelkomponenten mit einem unter 1 800 liegenden Molekulargewicht ist allerdings weniger bevorzugt. Die erfindungsgemäß in Frage kommenden, mindestens zwei, vorzugsweise zwei bis drei Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von BF$_3$ oder durch Anlagerung dieser Epoxide, gegebenenfalls im Gemish oder nacheinander, an Startkomponenten mit reaktionsfähigen Wasserstoffatomen wie Wasser, Alkohole Ammoniak oder Amine, z. B. Ethylenglykol, Propylenglykol-(1,3) oder -(1,2), Trimethylolpropan, 4,4'-Dihydroxydiphenylpropan, Anilin, Ethanolamin oder Ethylendiamin hergestellt. Auch Sucrosepolyether, wie sie z. B. in den deutschen Auslegeschriften 11 76 358 und 10 64 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre Hydroxylgruppen aufweisen. Auch durch Vinylpolymerisate modifizierte Polyether, wie sie z. B. durch Polymerisation von Styrol und Acrylnitril in Gegenwart von Polyethern entstehen (amerikanische Patentschriften 33 83 351, 35 04 273, 35 23 093, 31 10 695, deutsche Patentschrift 11 52 536), sind geeignet, ebenso OH-Gruppen aufweisende Polybutadiene. Zu den bevorzugten Polyhydroxypolyethern gehören insbesondere Alkoxylierungs-produkte der beispielhaft genannten di- und/oder trifunktionellen Startermoleküle unter Verwendung von Ethylenoxid und/oder Propylenoxid, wobei die genannten Alkylenoxide im Gemisch oder in beliebiger Reihenfolge eingesetzt werden können, allerdings sind reine Polyethylenoxid-Polyether weniger bevorzugt. Die bevorzugten Polyetherpolyole mit überwiegend primären Hydroxylgruppen werden in an sich bekannter Weise durch Aufpfropfen von Ethylenoxid am Kettenende erhalten.

Bei den erfindungsgemäß in Frage kommenden Polyethern können die endständigen gegenüber Isocyanatgruppen reaktionsfähigen Gruppen auch teilweise oder ausschließlich, z. B. zu 50, vorzugsweise zu 80-100 Äquivalentprozent aus primären und/oder sekundären aromatisch oder aliphatisch, vorzugsweise aliphatisch gebundenen Aminogruppen und zum Rest aus primären und/oder sekundären, aliphatisch gebundenen Hydroxylgruppen bestehen. In diesen Verbindungen können die die Aminogruppen tragenden, endständigen Reste mit der Polyetherkette auch über Urethan- oder Estergruppen verknüpft sein. Die Herstellung dieser « Aminopolyether » erfolgt in an sich bekannter Weise. So kann beispielsweise eine Aminierung von Polyhydroxypolyethern wie z. B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgruppen aufweisenden Polyethern beschrieben.

Höhermolekulare Polyhydroxylpolyether können auch durch Reaktion mit Isatosäureanhydrid in die entsprechenden Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Präpolymeren auf Basis von Polyhydroxypolyethern mit Hydroxylgruppen aufweisenden Enaminen, Aldiminen oder Ketiminen und anschließende Hydrolyse erhält man DE-OS 2 546 536 bzw. US-PS 3 865 791 höhermolekulare, endständige Aminogruppen aufweisende Verbindungen.

Bevorzugt eingesetzt werden Aminopolyether, die nach DE-OS 2 948 419 durch Hydrolyse von endständigen Isocyanatgruppen aufweisenden Verbindungen erhalten werden. Bei diesem Verfahren werden vorzugsweise zwei oder drei Hydroxylgruppen aufweisende Polyether mit Polyisocyanaten zu NCO-Präpolymeren umgesetzt und in einem zweiten Schritt die Isocyanatgruppe durch Hydrolyse in eine Aminogruppe überführt.

Die erfindungsgemäß als Teil der Komponente b) einzusetzenden « Aminopolyether » stellen oftmals Gemische der beispielhaft genannten Verbindungen dar und weisen (im statistischen Mittel) zwei bis drei endständige, gegenüber Isocyanatgruppen reaktionsfähige Gruppen auf.

Die beispielhaft genannten « Aminopolyether » können beim erfindungsgemäßen Verfahren gegebenenfalls auch in Abmischung von Aminogruppen-freien Polyhydroxypolyethern der in US-PS 4 218 543 beispielhaft genannten Art eingesetzt werden, obwohl dies weniger bevorzugt ist.

Gegebenenfalls anteilweise können erfindungsgemäß auch Hydroxylgruppen aufweisende Polyester, Polythioether, Polyacetale, Polycarbonate oder Polyesteramide mitverwendet werden, wie sie für die Herstellung von homogenen und von zellförmigen Polyurethanen an sich bekannt sind.

Erfindungsgemäß können auch Polyhydroxyl-(polyamino)-Verbindungen eingesetzt werden, in welchen hochmolekulare Polyaddukte bzw. Polykondensate in feindisperser oder gelöster Form enthalten sind.

Selbstverständlich können erfindungsgemäß als Teil der Ausgangskomponente b) auch beliebige Gemische der beispielhaft genannten Verbindungen mit gegenüber Isocyanatgruppen reaktionsfähigen Gruppen eingesetzt werden.

Die erfindungsgemäß als Teil der Ausgangskomponente b) in Betracht kommenden Verbindungen mit gegenüber Isocyanatgruppen reaktionsfähige Gruppen sind nicht auf die oben beispielhaft erwähnten Verbindungen begrenzt.

Bei den in den Verbindungen mit einem Molekulargewicht zwischen 1 800 und 12 000, welche mindestens zwei gegenüber Isocyanatgruppen reaktionsfähige Gruppen enthalten, gelösten Diaminen, handelt es sich um 1-Methyl-3,5-diethyl-2,4-diaminobenzol oder eine Mischung aus diesem mit 1-Methyl-3,5-diethyl-2,6-diaminobenzol.

Die Komponente b) besteht aus einer Lösung von (i) 34 bis 45 Gew.-%, bezogen auf die Gesamtkomponente b), 1-Methyl-3,5-diethyl-2,4-diaminobenzol oder dessen Gemisch mit vorzugsweise bis zu 35 Gew.-%, bezogen auf Diamingemisch an 1-Methyl-3,5-diethyl-2,6-diaminobenzol in (ii) einem oder mehreren Polyether mit endständigen Hydroxyl- und/oder Aminogruppen der oben beispielhaft genannten Art, wobei das Molverhältnis der Diamine zu den Verbindungen mit einem Molekulargewicht zwischen 1 800 und 12 000 bei 3 : 1 bis 60 : 1 liegt.

Zu den gegebenenfalls mitzuverwendenden Hilfs- und Zusatzmitteln c) gehören c1) Katalysatoren, ohne deren Mitverwendung im Falle des Einsatzes von Hydroxylgruppen aufweisenden Verbindungen als Teil der Komponente b) im allgemeinen kein Formteil mit kurzer Formstandzeit und technisch interessanten mechanischen Eigenschaften erhalten werden kann. Die Mitverwendung derartiger Katalysatoren ist jedoch oftmals dann entbehrlich, wenn der höhermolekulare Teil der Komponente b) d. h. insbesondere die Polyether ausschließlich oder zum überwiegenden Teil Aminogruppen als gegenüber Isocyanatgruppen reaktionsfähige Gruppen aufweisen.

Zu den bevorzugten Katalysatoren gehören organische Zinnverbindungen wie z. B. Zinn(II)-salze von Carbonsäuren wie Zinn(II)-acetat, Zinn(II)-octoat, Zinn(II)-ethylhexoat und Zinn(II)-laurat und die Dialkyl-zinnsalze von Carbonsäure, wie z. B. Dibutyl-zinndiacetat, Dimethylzinn-dilaurat, Dibutylzinn-dilaurat, Dibutylzinn-maleat oder Dioctylzinn-diacetat.

Als mitzuverwendende Katalysatoren kommen auch tertiäre Amine der an sich bekannten Art in Frage, z. B. Triethylamin, Tributylamin, N-Methyl-morpholin, N-Ethyl-morpholin, N-Cocomorpholin, N,N,N',N'-Tetramethyl-ethylendiamin, 1,4-Diazabicyclo(2,2,2)-octan, N-Methyl-N'-dimethylamino-ethylpiperazin, N,N-Dimetylbenzylamin, Bis-(N,N-diethylamnioethyl)-adipat, N,N-Diethylbenzylamin, Pentamethyl-diethylentriamin, N,N-Dimethylcyclohexylamin, N,N,N',N'-Tetramethyl-1,3-butandiamin, 1,2-Dimethylimidazol und 2-Methyl-imidazol.

Bevorzugter Katalysator dieses Typs ist das 1,4-Diazabicyclo-(2,2,2)-octan.

Im Falle der Verwendung von Hydroxylgruppen aufweisenden Aufbaukomponenten werden insbesondere die beispielhaft genannten Zinn-Katalysatoren allein oder zusammen mit den beispielhaft genannten Amin-Katalysatoren verwendet. Wie bereits ausgeführt, ist die Verwendung von Katalysatoren dann oftmals entbehrlich, wenn der höhermolekulare Teil der Komponente b), d. h. insbesondere die Polyether auschließlich oder überwiegend Aminogruppen auf gegenüber Isocyanatgruppen reaktionsfähige Gruppen aufweisen. In diesem Fall können gegebenenfalls als Katalysatoren auch ausschließlich die beispielhaft genannten Amin-Katalysatoren Verwendung finden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl Hanser Verlag, München 1966, z. B. auf den Seiten 96 bis 102 beschrieben.

Die Katalysatoren werden, falls überhaupt, in einer Menge von etwa 0,001 bis 10 Gew.-%, vorzugsweise 0,05 bis 1 Gew.-%, bezogen auf die Menge der Komponente b), eingesetzt.

Weitere, gegebenenfalls mitzuverwendende Hilfs- und Zusatzmittel c) sind c2) Treibmittel, die dann eingesetzt werden, wenn Formteile mit einer geschlossenen Oberfläche und einem zelligen Kern erhalten werden sollen. Geeignete Treibmittel sind z. B. Wasser (« chemisches Treibmittel », dessen Treibwirkung auf der Freisetzung von Kohlendioxid beruht) und/oder « physikalische Treibmittel », d. h. leicht flüchtige organische Substanzen und/oder gelöste inerte Gase. Zu den leicht flüchtigen organischen Substanzen gehören, im Sinne der Isocyanat-Additionsreaktion inerte Verbindungen wie z. B. Aceton, Ethylacetat, halogensubstituierte Alkane wie Methylenchlorid, Chloroform, Ethylidenchlorid, Vinylidenchlorid, Mono-fluortrichlormethan, Chlordifluormethan, Dichlordifluormethan, ferner Butan, Hexan, Heptan oder Diethylether. Geeignete inerte Gase sind z. B. Stickstoff, Luft, Kohlendioxid.

Eine Treibwirkung kann auch durch Zusatz von bei Temperaturen unter Abspaltung von Gasen, beispielsweise von Stickstoff, sich zersetzenden Verbindungen, z. B. Azoverbindungen wie Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510, beschrieben.

Zu den gegebenenfalls mitzuverwendenden Hilfs- und Zusatzmitteln c) gehören auch c3) oberflächenaktive Zusatzstoffe (Emulgatoren und Schaumstabilisatoren). Als Emulgatoren kommen z. B. die Natriumsalze von Ricinusölsulfaten oder auch von Fettsäuren oder Salze von Fettsäuren mit Aminen wie ölsaures Diethylamin oder stearinsaures Diethanolamin in Frage.

Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylen-

5

oxid mit einem Polydimethylsiloxanrest verbunden ist. Derartige Schaumstabilisatoren sind z. B. in der US-PS 2 764 565 beschrieben.

Als weitere, gegebenenfalls mitzuverwendende Hilfs- und Zusatzmittel c) kommen auch c4) niedermolekulare, mehrwertige Alkohole in Betracht, die gegebenenfalls zur Modifizierung der Eigenschaften der Formkörper neben den aminischen Kettenverlängerungsmitteln der Komponente b) in Mengen bis zu 50 Äquivalentprozent, bezogen auf die gegenüber Isocyanatgruppen reaktionsfähigen Gruppen der Diamine der Komponente b), mitverwendet werden können. Hierzu gehören beispielsweise Ethylenglykol, Butandiol-1,4, Hexamethylenglykol, Trimethylolpropan oder deren Gemische oder auch niedermolekulare, d. h. ein Molekulargewicht von unter 500 aufweisende Additionsprodukte von Alkylenoxiden insbesondere von Propylenoxid an derartige mehrwertige Alkohole oder auch an mehrwertige Amine wie z. B. Ethylendiamin oder Diethylentriamin.

Zu den erfindungsgemäß, gegebenenfalls mitzuverwendenden Hilfs- und Zusatzmitteln c) gehören auch c5) die an sich bekannten « inneren Formtrennmittel », wie sie beispielsweise in DE-OS 1 953 637, DE-OS 2 122 670, DE-OS 2 431 968 oder DE-OS 2 404 310 beschrieben sind. Hierzu gehören insbesondere die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Amine, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit OH- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse.

Zu den bevorzugten inneren Trennmitteln gehören (i) Estergruppen aufweisende Kondensationsprodukte von Ricinolsäure und ein- oder mehrwertigen Alkoholen mit einer Säurezahl von unter 5, wie sie beispielsweise in der DE-OS 3 436 163 beschrieben sind, (ii) die Metallsalze, insbesondere Zinksalze von aliphatischen Carbonsäuren mit mindestens 12 Kohlenstoffatomen, insbesondere Zinkstearat und (iii) Kombinationen der unter (i) und (ii) genannten Trennmittel.

Weitere gegebenenfalls mitzuverwendende innere Formtrennmittel sind beispielsweise Umsetzungsprodukte aus Fettsäureestern und Polyisocyanaten (DE-OS 2 319 648), Umsetzungsprodukte aus reaktionsfähige Wasserstoffatome aufweisenden Polysiloxanen und Mono- und/oder Polyisocyanaten (DE-OS 2 363 452), Ester von Hydroxymethylgruppen aufweisenden Polysiloxanen mit Mono- und/oder Polycarbonsäuren (DE-OS 2 363 452) und Salze aus Aminogruppen enthaltenden Polysiloxanen und Fettsäuren (DE-OS 2 427 273 und 2 445 648).

Grundsätzlich können auch beliebige Gemische der beispielhaft genannten inneren Formtrennmittel eingesetzt werden. Die inneren Formtrennmittel werden, falls überhaupt, in Mengen von 0,1 bis 15 Gew.-%, bezogen auf das gesamte Reaktionsgemisch, eingesetzt.

Weitere gegebenenfalls mitzuverwendende Hilfs- und Zusatzmittel c) sind beispielsweise Zellregler der an sich bekannten Art wie Paraffine oder Fettalkohole oder Dimethylpolysiloxane sowie Pigmente oder Farbstoffe und Flammschutzmittel der an sich bekannten Art., z. B. Tris-chlorethylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Glasfaser, Kieselgur oder Schlämmkreide.

Weitere Beispiele von gegebenenfalls erfindungsgemäß mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z. B. auf den Seiten 103 bis 113, beschrieben.

Die gegebenenfalls beim erfindungsgemäßen Verfahren mitzuverwendenden Hilfs- und Zusatzmittel werden vorzugsweise vor der Durchführung des erfindungsgemäßen Verfahrens der Komponente b) einverleibt.

Beim erfindungsgemäßen Verfahren wird die Polyisocyanatmenge (Komponente a)) vorzugsweise so bemessen, daß im reaktionsfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanat-Gruppen und Anzahl der gegenüber Isocyanaten reaktiven Gruppen, multipliziert mit 100. Bei der Durchführung des erfindungsgemäßen Verfahrens wird nach der bekannten Reaktionsspritzgußtechnik (RSG-Verfahren) gearbeitet. Die Menge des in die Form eingebrachten, gegebenenfalls schäumfähigen Gemisches wird im übrigen so bemessen, daß der Formkörper eine Dichte von 0,8 bis 1,4 g/cm³, vorzugsweise von 0,9 bis 1,3 g/cm³, aufweist. Dichten von über 1,2 g/cm³ können insbesondere dann auftreten, wenn beim erfindungsgemäßen Verfahren spezifisch schwere Zusatzmittel mitverwendet werden. Bei den beim erfindungsgemäßen Verfahren einzusetzenden Werkzeugen handelt es sich um die aus der Reaktionsspritzgußtechnik bekannten Vorrichtungen, wobei als Formen geschlossene Metallformen zum Einsatz gelangen, deren Innenwände gegebenenfalls mit « äußeren Formtrennmitteln » beispielsweise solchen auf Wachs-, Seifen- oder silikonbasis beschichtet werden können.

Als Ausgangstemperatur des in die Form eingebrachten Gemisches wird eine Temperatur zwischen 10° und 70 °C, vorzugsweise 30° bis 50 °C, gewählt.

Die erfindungswesentliche Werkzeugtemperatur, d. h. die Temperatur der Forminnenwand vor Befüllen der Form beträgt 105 bis 150 °C, vorzugsweise wird sie zwischen 110 und 130 °C gehalten.

Die nach dem erfindungsgemäßen Verfahren erhältlichen Formkörper können nach einer Formstandzeit von 5 bis 60 Sekunden entformt werden und eignen sich insbesondere zur Herstellung von flexiblen Automobil-Stoßstangen bzw. Karosserieelementen.

Beispiel

Die Verarbeitung der in dem folgenden Beispiel beschriebener Rezeptur erfolgte mit Hilfe der Reaktionsspritzgußtechnik (englisch « reaction injection moulding » (RIM)).

Die Polyol(polyamin)- und Polyisocyanat-Komponenten wurden einem Hochdruckdosieraggregat zugeführt und nach intensiver Vermischung in einem zwangsgesteuerten Mischkopf in kürzester Zeit in ein temperierbares heißes Metallwerkzeug gedrückt, wobei die Forminnenwand mit einem gebrauchsfertigen, handelsüblichen äußeren Formtrennmittel auf Wachs- und Silikonbasis ((R)Fluoricon 36-134 der Firma Acmos, Bremen) beschichtet war.

Das Plattenwerkzeug aus Stahl erlaubt die Herstellung von Prüfplatten der Abmessungen 535 × 300 × 3,5 mm. Das Füllen des Werkzeugs erfolgte von der Längsseite über einen Stangenanguß.

Beispiel

58,5 Gew.-Teile eines Polyethertriols der OH-Zahl 27, hergestellt durch Propoxylierung von Trimethylolpropan und anschließende Ethoxylierung des Propoxylierungsprodukts (Gewichtsverhältnis PO : EO = 78 : 22), 41,0 Gew.-Teile einer Mischung aus 65 Gew.-Teilen 1-Methyl-3,5-diethyl-2,4-diaminobenzol und 35 Gew.-Teilen 1-Methyl-3,5-diethyl-2,6-diaminobenzol, 2,0 Gew.-Teile eines Addukts von 5 Mol Propylenoxid auf 1 Mol Ethylendiamin, OH-Zahl 630, 0,3 Gew.-Teile Triethylendiamin, und 0,2 Gew.-Teile Dimethylzinndilaurat wurden zu einer Polyolkomponente vereinigt und mit 99,3 Gew.-Teilen eines Semiprepolymeren aus einem Polyisocyanatgemisch der Diphenylmethan-Reihe, bestehend aus 82 Teilen 4,4'-Diisocyanatodiphenylmethan, 8 Teilen 2,4'-Diisocyanatodiphenylmethan und 10 Teilen tri- und höherfunktionellen Polyisocyanaten der Diphenylmethanreihe, mit Dipropylenglykol mit dem NCO-Gehalt von 24,5 %, nach dem RSG-Verfahren verarbeitet. Die Temperatur der Rohstoffe betrug 45 °C, als Formstandzeit wurden 30 Sekunden gewählt.

Bei einer Werkzeugtemperatur von 120 °C konnte ein Formteil mit guter Anfangsfestigkeit (green strength) entnommen werden.

Das Polyurethan-Polyharnstoff-Elastomere zeigte bereits ohne Tempern die folgenden mechanischen Eigenschaften :

| | |
|---|---|
| Rohdichte (DIN 53 420) | 1 142 kg/m$^3$ |
| Zugfestigkeit (DIN 53 504) | 42,7 MPa |
| Bruchdehnung (DIN 53 504) | 75 % |
| Shore D | 79 |
| Biegemodul RT (ASTM-D-790-71) | 994 MPa |
| + 120 °C | 698 MPa |

**Patentanspruch**

Verfahren zur Herstellung von gegebenenfalls zellförmigen, elastischen Formkörpern einer Dichte von 0,8 bis 1,4 g/cm$^3$ mit einer geschlossenen Oberflächenschicht aus gegebenenfalls Urethangruppen aufweisenden Polyharnstoff-Elastomeren auf Basis von

a) bei Raumtemperatur flüssigen Di- oder Polyisocyanaten auf Basis von Diisocyanatodiphenylmethan,

b) Lösungen von 1-Methyl-3,5-diethyl-2,4-diaminobenzol oder einer Mischung aus diesem mit 1-Methyl-3,5-diethyl-2,6-diaminobenzol in Verbindungen mit einem (mittleren Molekulargewicht zwischen 1 800 und 12 000, welche mindestens zwei gegenüber Isocyanatgruppen reaktionsfähige Gruppen enthalten, und

c) gegebenenfalls den in der Polyurethanchemie an sich bekannten Hilfs- und Zusatzmitteln, wobei die Komponenten a) bis c) als one-shot-System nach der Reaktionsspritzgußtechnik verarbeitet und die Formkörper nach einer Formstandzeit von 5 bis 60 Sekunden entformt werden, dadurch gekennzeichnet, daß man die in der Komponente b) vorliegenden Diamine in einer Menge verwendet, die einem Anteil der Diamine in der Komponente b) von 34-45 Gewichtsprozent entspricht und die Werkzeugtemperatur bei mindestens 105 °C hält.

## Claim

A process for the production of optionally cellular elastic moldings having a density of 0.8 to 1.4 g/cm³ with a compact surface skin of polyurea elastomers optionally containing urethane groups and based on

a) di- or polyisocyanates based on diisocyanatodiphenyl methane which are liquid at room temperature,

b) solutions of 1-methyl-3,5-diethyl-2,4-diaminobenzene or a mixture thereof with 1-methyl-3,5-diethyl-2,6-diaminobenzene in compounds having an average molecular weight of 1,800 to 12,000 which contain at least two isocyanate-reactive groups and

c) optionally the auxiliaries and additives known per se in polyurethane chemistry, components a) to c) being processed as a one-shot system by reaction injection molding and the moldings being demolded after a residence time in the mold of 5 to 60 seconds, characterized in that the diamines present in component b) are used in a quantity which corresponds to a percentage of the diamines in component b) of 34 to 45 % by weight and the mold temperature is kept at at least 105 °C.

## Revendication

Procédé de production de pièces moulées élastiques éventuellement cellulaires, de masse volumique égale à 0,8-1,4 g/cm³, présentant une couche superficielle fermée en élastomères du type polyurée portant éventuellement des groupes uréthanne, obtenus en partant :

a) de diisocyanates ou de polyisocyanates liquides à la température ambiante, à base de diisocyanatodiphénylméthane ;

b) de solutions de 1-méthyl-3,5-diéthyl-2,4-diaminobenzène ou d'un mélange de ce composé avec un 1-méthyl-3,5-diéthyl-2,6-diaminobenzène dans des composés de poids moléculaire moyen compris entre 1 800 et 12 000, qui contiennent au moins deux groupes aptes à réagir vis-à-vis des groupes isocyanato et

c) le cas échéant, des adjuvants et additifs connus dans la chimie des polyuréthannes, les composants a) à c) étant mis en œuvre en tant que système one-shot selon la technique réactive de moulage par injection et les pièces moulées étant démoulées après un temps de séjour en moule de 5 à 60 secondes, caractérisé en ce que les diamines présentes dans le composant b) sont utilisées en une quantité qui correspond à une proportion des diamines, dans le composant b), de 34 à 45 % en poids, et on maintient la température de l'outil à une valeur d'au moins 105 °C.